(19) Europäisches Patentamt
European Patent Office
Office européen des brevets

(11) EP 2 834 250 B1

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **13772011.6**

(22) Anmeldetag: **02.04.2013**

(51) Int Cl.:
***C07F 7/08*** *(2006.01)* ***C07F 1/02*** *(2006.01)*
***C01B 33/32*** *(2006.01)* ***H01M 4/60*** *(2006.01)*
***H01M 4/58*** *(2010.01)*

(86) Internationale Anmeldenummer:
**PCT/IB2013/052632**

(87) Internationale Veröffentlichungsnummer:
**WO 2013/150448 (10.10.2013 Gazette 2013/41)**

(54) **LITHIUMSILIKATE**

LITHIUMSILICATE

SILICATES DE LITHIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2012 DE 102012006897**

(43) Veröffentlichungstag der Anmeldung:
**11.02.2015 Patentblatt 2015/07**

(73) Patentinhaber: **BASF SE**
**67056 Ludwigshafen am Rhein (DE)**

(72) Erfinder:
- **HOGE, Berthold Theo**
  **33604 Bielefeld (DE)**
- **STEINHAUER, Simon Sebastian**
  **33602 Bielefeld (DE)**
- **IGNATYEV, Nikolai**
  **47058 Duisburg (DE)**
- **SCHULTE, Michael**
  **65474 Bischofsheim (DE)**

(74) Vertreter: **BASF IP Association**
**BASF SE**
**ZRX-C6**
**67056 Ludwigshafen (DE)**

(56) Entgegenhaltungen:
**EP-A1- 2 394 956 US-A1- 2009 099 322**

- **SIMON STEINHAUER ET AL: "Synthesis of Five- and Six-Coordinate Tris(pentafluoroethyl)fluorosilicates", ANGEWANDTE CHEMIE INTERNATIONAL EDITION, Bd. 53, Nr. 2, 29. November 2013 (2013-11-29), Seiten 562-564, XP055157685, ISSN: 1433-7851, DOI: 10.1002/anie.201308059**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 834 250 B1

**Beschreibung**

Die Erfindung betrifft Lithiumperfluoralkylfluorsilikate, deren Herstellung und deren Verwendung als Leitsalze in elektrochemischen Zellen, insbesondere in Lithium-Batterien, Lithium-Ionen-Batterien oder Lithium-Ionen-Kondensatoren, sowie Elektrolyte oder elektrochemische Zellen, diese Lithiumperfluoralkylfluorsilikate enthaltend.

Eine Schlüsselkomponente für elektrochemische Vorrichtungen ist der Elektrolyt. Dieser beeinflusst die Lebensdauer, Sicherheit und Leistung beispielsweise einer Lithium-Ionen-Batterie entscheidend.

Die Leitfähigkeit eines Elektrolyten enthaltend ein in einem organischen Lösungsmittel gelöstes Lithiumsalz wird durch die Natur des Lithiumsalzes bestimmt, d.h. mit dessen Löslichkeit und der Fähigkeit in freie oder solvatisierte Kationen und Anionen zu dissoziieren. Die dissoziierten Ionen sind für den Ladungstransfer in elektrochemischen Zellen verantwortlich.

Üblicherweise wird in Lithium- oder Lithium-Ionen-Batterien Lithiumhexafluorphosphat als Leitsalz verwendet, wie beispielsweise in W.A. van Schalkwijk und B. Scrosati (Eds.), "Advances in Lithium-Ion Batteries, Kluwer Academic/Plenum Publisher, N.Y., 2002, Kapitel 5, Seiten 155-183 beschrieben. Nachteilig ist, dass dieses Salz relativ wenig hydrolysestabil ist. Es wurden daher verschiedenste Versuche unternommen einen Ersatz für dieses Salz zu finden.

In JP 63239780 wird Lithiumhexafluorsilikat als mögliches Leitsalz in nicht-wässrigen oder Polymerelektrolyten für Lithiumbatterien beschrieben.

Lithiumhexafluorsilikat besitzt die chemische Formel $Li_2SiF_6$. In der Literatur wird oft die chemische Formel $LiSiF_6$ verwendet, die jedoch chemisch nicht korrekt ist, wie beispielsweise in EP 1172877 A1. Die Löslichkeit des Lithiumhexafluorsilikats in organischen Lösungsmitteln ist sehr gering. In JP 63239780 wird beispielsweise eine 0.02 M Lösung von $Li_2SiF_6$ in einer Mischung von Ethylencarbonat und 2-Methyltetrahydrofuran im Volumenverhältnis 1:1 hergestellt.

In EP 1172877 A1 wird eine Akkumulatorbatterie mit einem nichtwässrigen Elektrolyten beschrieben, wobei eines der Elektrolytsalze Lithiumtetrafluorborat ist und das andere Elektrolytsalz unter anderem Lithiumhexafluorsilikat sein kann.

Die Einführung von Perfluoralkylgruppen an Silizium erhöht die Löslichkeit in organischen Lösungsmitteln.

In N. Maggiarosa et al, Angew. Chem. Int. Ed. 1999, 38 (15), 2252-2253 werden beispielsweise Tetramethylammoniumsalze mit den Anionen $[(CH_3)_3Si(CF_3)F]$ und $[(CH_3)_3Si(CF_3)_2]$ als sehr reaktive Substanzen beschrieben, die als Zwischenverbindungen insbesondere zur Übertragung von Trifluormethylgruppen geeignet sind.

Tris(dimethylamino)sulfonium bis(trifluormethyl)trimethylsilicat kann beispielsweise isoliert werden und ist bis zu Temperaturen von 0°C stabil. Die Verbindung zersetzt sich jedoch ab Temperaturen von 0 bis 5°C exotherm, wie in A. Kolomeisev et al, Chem. Commun. 1999, 1017-1018 beschrieben. Derartige Anionen sind daher für neue Leitsalze nicht geeignet.

Die Aufgabe der Erfindung war daher, geeignete Leitsalze für Elektrolyte zur Verwendung in elektrochemischen Zellen zur Verfügung zu stellen, die in organischen Lösungsmitteln stabil sind und ein relativ geringes Molekurlargewicht besitzen, so dass die Herstellung von 1 M Lösungen in organischen Lösungsmitteln leicht möglich ist.

Versuche von H. Beckers an der Bergischen Universität Gesamthochschule Wuppertal 1987 konnten keine Synthese eines Trifluormethyltetrafluorsilikatsalzes bestätigen. In seiner Dissertation wird auf Seite 15 folgende Zersetzung beschrieben:

$$CF_3SiF_3 + KF \xrightarrow[\text{Aceton}]{\text{unter 0°C}} SiF_4 + \text{":}CF_2\text{"} + F^-$$

Überraschenderweise wurde gefunden, dass Perfluoralkylfluorsilane mit Lithiumfluorid in Anwesenheit eines organischen Lösungsmittels umgesetzt werden können und zu Lithiumperfluoralkylfluorsilikaten reagieren. Die erfindungsgemäße Aufgabe wird deshalb gelöst durch Lithiumperfluoralkylfluorsilikate gemäß der vorliegenden Erfindung.

Ein erster Gegenstand der Erfindung sind demzufolge die Lithiumsalze der Formel (I) und/oder (II)

$$Li\,[(R_f)_nSiF_{5-n}] \qquad (I)$$

$$Li_2\,[(R_f)_nSiF_{6-n}] \qquad (II),$$

wobei

$R_f$ jeweils unabhängig voneinander eine geradkettige oder verzweigte Perfluoralkylgruppe mit 2 bis 12 C-Atomen bedeutet und

n eine ganze Zahl von 1 bis 4 bedeutet.

Eine Perfluoralkylgruppe mit 2 bis 12 C-Atomen entspricht einer geradkettigen oder verzweigten Alkylgruppe mit 2 bis 12 C-Atomen, wobei alle H-Atome durch F-Atome ersetzt sind. Alkylgruppen mit 2 bis 12 C-Atomen sind beispielsweise Ethyl, iso-Propyl, Propyl, Butyl, sec-Butyl oder tert-Butyl, Pentyl, 1-, 2- or 3-Methylbutyl, 1,1-, 1,2- or 2,2-Dimethylpropyl, 1-Ethylpropyl, n-Hexyl, n-Heptyl, n-Octyl, n-Nonyl, n-Decyl, n-Undecyl oder n-Dodecyl.

Bevorzugte Perfluoralkylgruppen $R_f$ bedeuten jeweils unabhängig voneinander eine geradkettige oder verzweigte Perfluoralkylgruppe mit 2 bis 6 C-Atomen. Besonders bevorzugte Perfluoralkylgruppen $R_f$ sind jeweils unabhängig voneinander Pentafluorethyl, n-Heptafluorpropyl, n-Nonafluorbutyl oder n-Perfluorhexyl.

In einer bevorzugten Ausführungsform der Erfindung sind die Perfluoralkylgruppen $R_f$ gleich.

Die Variable n ist bevorzugt 1, 2 oder 3. Die Variable n ist besonders bevorzugt 2 oder 3. Die Variable n ist ganz besonders bevorzugt 3.

Bevorzugte Verbindungen der Formel (I), wie zuvor beschrieben, sind daher die Salze Lithium-tris(pentafluorethyl)difluorsilikat, Lithiumbis(pentafluorethyl)trifluorsilikat, Lithiumtris(n-heptafluorpropyl)difluorsilikat,
Lithiumbis(n-heptafluorpropyl)trifluorsilikat,
Lithiumtris(n-nonafluorbutyl)difluorsilikat,
Lithiumbis(n-nonafluorbutyl)trifluorsilikat,
Lithiumtris(n-tridecafluorhexyl)difluorsilikat oder
Lithiumbis(n-tridecafluorhexyl)trifluorsilikat.

Bevorzugte Verbindungen der Formel (II), wie zuvor beschrieben, sind daher die Salze Dilithiumtris(pentafluorethyl)trifluorsilikat, Dilithiumbis(pentafluorethyl)tetrafluorsilikat, Dilithiumtris(n-heptafluorpropyl)trifluorsilikat, Dilithiumbis(n-heptafluorpropyl)tetrafluorsilikat, Dilithiumtris(n-nonafluorbutyl)trifluorsilikat, Dilithiumbis(n-nonafluorbutyl)tetrafluorsilikat, Dilithiumtris(n-tridecafluorhexyl)trifluorsilikat oder Dilithiumbis(n-tridecafluorhexyl)tetrafluorsilikat.

Besonders bevorzugte Lithiumsalze gemäß der Erfindung sind Lithiumtris(pentafluorethyl)-difluorsilikat und Lithiumbis(pentafluorethyl)trifluorsilikat. Ein ganz besonders bevorzugtes Lithiumsalz gemäß der Erfindung ist Lithiumtris(pentafluorethyl)difluorsilikat.

Die Verbindungen der Formel (I), wie zuvor beschrieben, können durch Reaktion eines entsprechenden Silans mit Lithiumfluorid synthetisiert werden.

Ein weiterer Gegenstand der Erfindung ist demzufolge ein Verfahren zur Herstellung von Verbindungen der Formel (I), wie zuvor beschrieben oder als bevorzugt beschrieben, dadurch gekennzeichnet, dass ein Fluor(perfluoralkyl)silan der Formel (III)

$$(R_f)_nSiF_{4-n} \qquad (III),$$

wobei $R_f$ und n eine der zuvor genannten Bedeutungen oder bevorzugt angegebenen Bedeutungen haben, unter trockener Luft oder Inertgasbedingungen und in Gegenwart eines organischen Lösungsmittels mit Lithiumfluorid umgesetzt wird.

Die Umsetzung findet vorzugsweise in trockener Atmosphäre, zum Beispiel unter trockener Luft, Stickstoff oder Argon, statt. Besonders bevorzugt wird die Reaktion unter trockener Luft oder trockener Stickstoffatmosphäre durchgeführt.

Die Umsetzung findet vorzugsweise in getrockneten organischen Lösungsmitteln statt. Geeignete organische Lösungsmittel werden beispielsweise ausgewählt aus Dimethylcarbonat, Diethylcarbonat, Propylencarbonat, Ethylencarbonat, Ethylmethylcarbonat, Dimetoxyethan, Diethylether, Methyl-t-Butylether, $\gamma$-Butyrolacton, Tetrahydrofuran, 2-Methyltetrahydrofuran, Ethylacetate oder einem Gemisch der genannten Lösungsmittel. Bevorzugt wird in Dimethylcarbonat umgesetzt.

Vorzugsweise wird Lithiumfluorid im organischen Lösungsmittel bei Temperaturen von -169°C bis Raumtemperatur vorgelegt, bevorzugt bei -169°C, und die Verbindung der Formel (III) wird aufkondensiert. Die eigentliche Umsetzung findet dann bei Erwärmen auf Temperaturen zwischen 10°C und 40°C statt. Vorzugsweise findet die Reaktion bei Raumtemperatur (25°C) statt.

Die Verbindungen der Formel (III) sind nicht kommerziell erhältlich, können jedoch wie im Beispielteil beschrieben oder nach entsprechend auf das benötigte Silan modifizierten Verfahren hergestellt werden.

Die Verbindung der Formel (III), wobei n 3 bedeutet und $R_f$ jeweils Pentafluorethyl bedeutet, d.h. das Fluortris(pentafluorethyl)silan, kann beispielsweise durch Umsetzung von Brom-tris(pentafluorethyl)silan mit $SbF_3$ bei Raumtemperatur hergestellt werden. Die detaillierten Reaktionsbedingungen sowie die Herstellung des Bromtris(pentafluorethyl)silans werden im Beispielteil beschrieben.

Die Verbindung der Formel (III), wobei n 2 bedeutet und $R_f$ jeweils Pentafluorethyl bedeutet, d.h. das Difluorbis(pentafluorethyl)silan, kann beispielsweise durch Umsetzung von Methyl-tris(pentafluorethyl)silan mit Fluor und sich anschließender fraktionierter Kondensation erhalten werden. Die detaillierten Reaktionsbedingungen sind im Beispielteil beschrieben.

Die Verbindung der Formel (III), wobei n 4 bedeutet und $R_f$ jeweils Pentafluorethyl bedeutet, d.h. das Tetrakis(pentafluorethyl)silan, kann beispielsweise durch Umsetzung von Ethyl-tris(pentafluorethyl)silan mit Fluor erhalten werden. Die detaillierten Reaktionsbedingungen sind im Beispielteil beschrieben.

Alternativ können die Verbindungen der Formel (I) und/oder (II) auch durch Reaktion von Siliziumtetrachlorid mit dem entsprechenden Perfluoralkyllithium hergestellt werden.

Ein weiterer Gegenstand der Erfindung ist demzufolge ein Verfahren zur Herstellung von Verbindungen der Formel (I) und/oder (II), wie zuvor beschrieben oder als bevorzugt beschrieben, dadurch gekennzeichnet, dass Siliziumtetrachlorid mit Perfluoralkyllithium umgesetzt wird, wobei Perfluoralkyl einer Perfluoralkylgruppe mit 2 bis 12 C-Atomen entspricht.

Diese Umsetzung findet vorzugsweise bei Temperaturen von -78 bis -40°C in einem organischen Lösungsmittel statt. Geeignete Lösungsmittel sind beispielsweise Dialkylether, wobei die Alkylgruppen jeweils unabhängig voneinander 1 bis 4 C-Atome haben können und linear oder verzweigt sein können, oder Gemische der Dialkylether mit Hexan. Bevorzugte Lösungsmittel sind Diethylether oder das Gemisch von Diethylether und Hexan.

Siliziumtetrachlorid ist kommerziell erhältlich. Die entsprechenden Perfluoralkyllithium-Verbindungen können beispielsweise nach den beschriebenen Verfahren in P. G. Gassmann, N. J. O'Reilly, Tetrahedron Lett. 1985, 26, S. 5243; H. Uno, S.-i. Okada, T. Ono, Y. Shiraishi, H. Suzuki, J. Org. Chem. 1992, 57, S.1504; H. Uno, H. Suzuki, Synlett, 1993, S. 91; K. Maruoka, I. Shimada, M. Akakura, H. Yamamoto, Synlett, 1994, S. 847 hergestellt werden.

In der Regel entsteht bei dieser alternativen Umsetzung ein Gemisch aus Verbindungen der Formel (I) und der Formel (II). Die Steuerung, welche Verbindung bevorzugt entsteht, gelingt durch die Verhältnisse der eingesetzten Ausgangsstoffe und der Wahl der Aufarbeitung. Salze der Formel (I) können ebenfalls als feste oder flüssige Komplexe mit einem Lösungsmittel, beispielsweise mit Dimethoxyethan, isoliert werden.

Ein weiterer Gegenstand der Erfindung ist die Verwendung mindestens einer Verbindung der Formel (I) und/oder der Formel (II), wie zuvor beschrieben oder als bevorzugt beschrieben, als Leitsalz in elektrochemischen Zellen.

Bevorzugte elektrochemische Zellen sind Lithium-Batterien, Lithium-Ionen-Batterien oder Lithium-Kondensatoren.

Die erfindungsgemäßen Lithiumsalze können ohne weitere Einschränkung auch in Kombination mit anderen Leitsalzen oder Additiven in den elektrochemischen Zellen verwendet werden. Je nach Konzentration in einem Elektrolyten können die erfindungsgemäßen Lithiumsalze auch Additive sein.

Ein weiterer Gegenstand der Erfindung ist ein Elektrolyt enthaltend mindestens eine Verbindung der Formel (I) und/oder (II), wie zuvor beschrieben oder als bevorzugt beschrieben.

Chemisch gesehen ist ein Elektrolyt eine beliebige Substanz, die freie Ionen enthält und dadurch elektrisch leitfähig ist. Ein typischer Elektrolyt ist eine ionische Lösung, aber Schmelz-und Festelektrolyte sind ebenfalls möglich.

Ein erfindungsgemäßer Elektrolyt oder eine entsprechende Elektrolytformulierung ist daher ein elektrisch leitfähiges Medium, hauptsächlich aufgrund der Anwesenheit mindestens einer Substanz, die in gelöstem und/oder in geschmolzenem Zustand vorliegt, d.h. eine elektrische Leitfähigkeit durch Bewegung von Ionen unterstützt.

Die erfindungsgemäßen Verbindungen können in völliger Analogie zu alternativen Lithiumverbindungen eingesetzt werden, die für diese Anwendung bekannt sind, und zeigen hierbei außergewöhnlich hohe Stabilitäten. Entsprechende Batteriezellen zeigen vorzügliche Eigenschaften bezüglich Kapazität und Spannungskonstanz, sowie eine uneingeschränkte Funktionsfähigkeit über eine überdurchschnittlich hohe Zahl an Lade-Entlade-Zyklen hinweg.

Werden die Verbindungen der Formel (I) und/oder der Formel (II) demzufolge als Leitsalz in den erfindungsgemäßen Elektrolyten eingesetzt, so werden 0,45 bis 2 molare, bevorzugt 1 molare Lösungen des Lithium-Leitsalzes in einem aprotischen Lösungsmittel oder Lösungsmittelgemisch verwendet.
Für die Zwecke der vorliegenden Erfindung bezieht sich die Molarität auf die Konzentration bei 25°C.

Werden die Verbindungen der Formel (I) und/oder der Formel (II) als Additiv in den erfindungsgemäßen Elektrolyten eingesetzt, so liegt die typische Konzentration zwischen 0,05 und 10 Gewichtsprozent, vorzugsweise zwischen 0,05 und 5 %, bezogen auf das Gesamtgewicht des Elektrolyten.

Der erfindungsgemäße Elektrolyt kann neben der mindestens einen Verbindung der Formel (I) oder (II), wie zuvor beschrieben oder als bevorzugt beschrieben, ein gegebenenfalls weiteres Leitsalz enthalten, bevorzugt ausgewählt aus einem Lithiumsalz und/oder einem Tetraalkylammoniumsalz, wobei die Alkylgruppen jeweils unabhängig voneinander eine Alkylgruppe mit 1 bis 4 C-Atomen bedeutet.

In einer bevorzugten Ausführungsform bei Verwendung des Elektrolyten in Lithium- oder Lithium-Ionen-Batterien und Lithium-Ionen Kondensatoren, ist das Leitsalz ein Lithiumleitsalz wie $LiPF_6$, $LiBF_4$, $LiN(SO_2F)_2$, $LiN(SO_2CF_3)_2$, $LiN(SO_2C_2F_5)_2$, $LiF_5P(C_2F_5)$, $LiF_5P(C_3F_7)$, $LiF_5P(C_4F_9)$, $LiF_3P(C_2F_5)_3$, $LiF_4P(C_2F_5)_2$, $LiF_3P(C_4F_9)_3$, $LiB(C_2O_4)_2$ oder $LiF_2B(C_2O_4)$.

Bei Verwendung des Elektrolyten enthaltend die mindestens eine Verbindung der Formel (I) oder (II), wie zuvor beschrieben oder als bevorzugt beschrieben, als Additiv in Doppelschicht-oder Superkondensatoren, ist das Leitsalz bevorzugt ein Tetraalkylammoniumsalz aus der Gruppe $[N(C_2H_5)_4]BF_4$, $[N(C_2H_5)_4]PF_6$, $[N(C_2H_5)_3(CH_3)]BF_4$, $[N(C_2H_5)_3(CH_3)]PF_6$, $[N(C_2H_5)_4][N(SO_2CF_3)_2]$, $[N(C_2H_5)_3(CH_3)][N(SO_2CF_3)_2]$, $[N(C_2H_5)_4][PF_3(C_2F_5)_3]$, $[N(C_2H_5)_3(CH_3)][PF_3(C_2F_5)_3]$, $[N(C_2H_5)_4][PF_4(C_2F_5)_2]$, $[N(C_2H_5)_3(CH_3)][PF_4(C_2F_5)_2]$. $[N(C_2H_5)_4][PF_5(C_2F_5)]$,

$[N(C_2H_5)_3(CH_3)][PF_5(C_2F_5)]$.

Bevorzugt werden 0,45 bis 2 molare, besonders bevorzugt 1 molare, Lösungen des Lithium-Leitsalzes oder der Gemische von Lithium-Leitsalzen in einem aprotischen Lösungsmittel oder Lösungsmittelgemisch verwendet.

Die erfindungsgemäßen Elektrolyte enthalten vorzugsweise ein aprotisches Lösungsmittel oder Lösungsmittelgemisch, sowie gegebenenfalls weitere Additive. Sie können in Kombination mit weiteren Leitsalzen und/oder Zusatzstoffen, als Bestandteil eines Polymerelektrolyts oder Phasentransfermediums verwendet werden.

Vorzugsweise besteht das aprotische Lösungsmittel des Elektrolyten aus organischen offenkettigen oder zyklischen Carbonaten, Carbonsäureestern, Nitrilen, Silanen oder Sulfonsäureestern oder einem Gemisch daraus.

Bevorzugte offenkettige oder zyklische Carbonate sind Diethylcarbonat, Dimethylcarbonat, Ethylmethylcarbonat, Ethylencarbonat oder Propylencarbonat.

Bevorzugte Carbonsäureester sind Ethylacetat oder Methylpropionat.

Bevorzugte Nitrile sind Adipinsäuredinitril, Valeronitril und Acetonitril, besonders bevorzugt ist Acetonitril.

Das organische Lösungsmittel ist vorzugsweise in 5 bis 90 Gewichtsprozent, vorzugsweise in 40 bis 90 Gewichtsprozent in dem Elektrolyt enthalten, wobei sich die Gewichtsprozentangabe auf den gesamten Elektrolyten bezieht.

Weitere Additive können beispielsweise aus den bekannten Additiven Vinylencarbonat, Propan-sulton, Vinylacetat, Biphenyl, Cyclohexylbenzen, organischen Aminen, beispielsweise Trial-kylaminen, Dialkylphenylaminen oder N-silylierte Amine, wie Trimethylsilylimidazol als Beispiel für ein N-silyliertes cyclisches Amin, oder verschiedenen Sulphonen, beispielsweise Diphenylsulphon, ausgewählt werden, wobei die Alkylgruppen in den erwähnten Aminen jeweils unabhängig voneinander eine geradkettige oder verzweigte Alkylgruppe mit 1 bis 20 C-Atomen sein können.

In einer bevorzugten Ausführungsform sind neben den erfindungsgemäßen Salzen der Formel (I) und/oder der Formel (II), wie zuvor beschrieben, auch die Additive der genannten Gruppe

Vinylencarbonat, Propansulton, Vinylacetat, Biphenyl, Cyclohexylbenzen, organische Amine, N-silylierte Amine oder Sulphone, wobei die Alkylgruppen in den erwähnten Aminen jeweils unabhängig voneinander eine geradkettige oder verzweigte Alkylgruppe mit 1 bis 20 C-Atomen sein können, in dem Elektrolyten enthalten.

Eine andere Klasse von Additiven, die enthalten sein können, sind Additive, die eine Gelbildung hervorrufen für sogenannte Gel-Elektrolyte, das sind Elektrolyte, die einen "quasi-soliden" Zustand einnehmen. Sie haben strukturelle Eigenschaften von Festelektrolyten, behalten aber leitfähige Eigenschaften wie Flüssigelektrolyte.

Derartige Gel-Additive können von anorganischen partikulären Materialien ausgewählt werden, beispielsweise $SiO_2$, $TiO_2$ oder $Al_2O_3$. Die erfindungsgemäßen Elektrolyte können derartige Gel-Additive in 0.01 bis 20 Gewichtsprozent enthalten, bezogen auf den Gesamt-Elektrolyten, vorzugsweise in 1 bis 10 Gewichtsprozent.

Bei Vorhandensein eines Lösungsmittels in dem erfindungsgemäßen Elektrolyten kann weiterhin ein Polymer enthalten sein, wobei es sich bei dem Polymer um Polyvinylidenfluorid, Polyvinyliden-Hexafluorpropylen-, Polyvinyliden-Hexafluorpropylen-Chlortrifluorethylen-Copolymere, Nafion, Polyethylenoxid, Polymethylmethacrylat, Polyacrylnitril, Polypropylen, Polystyrol, Polybutadien, Polyethylenglycol, Polyvinylpyrrolidon, Polyanilin, Polypyrrol, Polythiophen handelt. Diese Polymere werden den Elektrolyten zugesetzt, um Flüssigelektrolyte in quasi-feste oder Festelektrolyte umzuwandeln und so die Lösungsmittelretention zu verbessern, vor allem beim Altern.

Die Herstellung der erfindungsgemäßen Elektrolyte erfolgt nach Methoden, die dem Fachmann auf dem Gebiet der Herstellung von Elektrolyten bekannt ist, in der Regel durch Lösen des Leitsalzes in dem entsprechenden Lösungsmittelgemisch und Zugabe weiterer Zusatzstoffe.

Ein weiterer Gegenstand der Erfindung ist eine elektrochemische Zelle enthaltend mindestens eine Verbindung der Formel (I) und/oder der Formel (II), wie zuvor beschrieben oder als bevorzugt beschrieben.

Vorzugsweise ist die elektrochemische Zelle eine Lithium-Batterie, eine Lithium-Ionen-Batterie oder ein Lithium-Ionen-Kondensator.

Eine Lithium-Batterie ist eine Batterie, in der als negative Elektrode eine Lithium-Metall-Elektrode verwendet wird.

Eine Lithium-Ionen-Batterie verwendet als negative Elektrode Materialien, in die Lithium reversibel ein- oder ausgelagert werden können. Beispiele hierfür sind Graphit, Silizium oder Silizium -Kohlenstoff-Komposite, Zinnoxide oder Lithiumtitanoxide.

Der generelle Aufbau derartiger elektrochemischer Zellen ist bekannt und dem Fachmann auf diesem Gebiet geläufig, beispielsweise für Batterien in Linden's Handbook of Batteries (ISBN 978-0-07-162421-3).

Die Anode besteht beispielsweise aus Kohlenstoff/Graphit, die Kathode aus einem Lithium-Metalloxid oder Lithium-(Eisen)-phosphat und der Separator aus Polypropylen/Polyethylen oder keramischer Folie.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die erhaltenen Stoffe werden Mittels Elementaranalyse und NMR- Spektroskopie charakterisiert.

NMR-Spektren werden mit den Spektrometern Avance 250, Avance II 300,

der Firma Bruker, Karlsruhe, aufgenommen. Aceton-$D_6$ wird in einer Kapillare als Locksubstanz verwendet. Die Referenzierung erfolgt mit externer Referenz: TMS für $^{1}H$ und $^{13}C$ Spektren; $CCl_3F$ - für $^{19}F$ und 85% $H_3PO_4$ - für $^{31}P$ Spektren.

Beispiel 1. Darstellung von Diethylaminotris(pentafluorethyl)silan

$$(C_2H_5)_2NSiCl_3 + 3\ LiC_2F_5 \xrightarrow{-80°C,\ Et_2O} (C_2H_5)_2NSi(C_2F_5)_3 + 3\ LiCl$$

Es werden 100 ml Diethylether und 34 ml 1,6 M (54 mmol) n-Butyllithium in Hexan in einem Schlenkkolben vorgelegt und bei -85°C entgast. Nach dem Aufkondensieren von 56 mmol Pentafluorethan wird die Lösung für 45 min bei -80°C gerührt. Anschließend werden langsam 3,1 g (15 mmol) $Et_2NSiCl_3$ zugetropft. Das Reaktionsgemisch langsam mit der Möglichkeit zum Druckausgleich im Kältebad von -80°C auf Raumtemperatur (RT) erwärmt. Vom entstandenen Niederschlag wird über eine Umkehrfritte abfiltriert. Am Rotationsverdampfer werden die Lösemittel entfernt. Der leicht gelbliche Rückstand wird fraktioniert destilliert. Bei einem Druck von 66 mbar und einer Kopftemperatur von 98 °C wird $(C_2F_5)_3SiNEt_2$ als klare farblose Flüssigkeit erhalten. Ausbeute: 5,7 g (12,4 mmol) 82 % (bezogen auf $SiCl_3NEt_2$).

NMR-spektroskopische Daten von $(C_2F_5)_3SiNEt_2$ in $CDCl_3$, RT .

| Kern | δ / ppm | Aufspaltung | J / Hz | Zuordnung |
|---|---|---|---|---|
| $^{19}F$ | -81,8 | s | - | $[Si(CF_2CF_3)_3NEt_2]$ |
| | -121,5 | s | - | $[Si(CF_2CF_3)_3NEt_2]$ |
| 1H | 3,1 | q | $^{3}J_{HH}$= 7,0 | $[Si(CF_2CF_3)_3N(CH_2CH_3)_2]$ |
| | 1,1 | t | $^{3}J_{HH}$= 7,0 | $[Si(CF_2CF_3)_3N(CH_2CH_3)_2]$ |
| $^{29}Si\{^{19}F\}$ | -41,6 | quin | $^{3}J_{SiH}$= 4,1 | $[Si(CF_2CF_3)_3NEt_2]$ |
| $^{29}Si\{1H\}$ | -41,6 | sept | $^{2}J_{SiF}$= 36 | $[Si(CF_2CF_3)_3NEt_2]$ |
| $^{13}C\{^{19}F\}$ | 119,5 | s | - | $[Si(CF_2CF_3)_3NEt_2]$ |
| | 116,1 | s | - | $[Si(CF_2CF_3)_3NEt_2]$ |
| $^{13}C\{^{1}H\}$ | 39,3 | s | - | $[Si(CF_2CF_3)_3N(CH_2CH_3)_2]$ |
| | 12,5 | s | - | $[Si(CF_2CF_3)_3N(CH_2CH_3)_2]$ |

Beispiel 2. Darstellung von Tetrakis(pentafluorethyl)silan

$$(C_2F_5)_3SiC_2H_5 \xrightarrow[-\ 5\ HF]{F_{2,}\ RT} Si(C_2F_5)_4$$

124 mg von $(C_2F_5)_3SiC_2H_5$ (0.3 mmol) wird in einen FEP-Reaktor kondensiert und bei -120 °C mit 3 mmol $F_2$ (5%ig in He) versetzt. Das gasförmige Reaktionsgemisch wird 2 Stunden bei Raumtemperatur mittels einer Pumpe in einer mit $F_2$ passivierten Edelstahlanlage (316) umgewälzt. Anschließend werden alle kondensierbaren Bestandteile bei -196 °C ausgefroren. Bei -78 °C werden alle flüchtigen Bestandteile abgetrennt und der flüssige, mit wenig HF verunreinigte Rückstand wird in Pentan NMR-spektroskopisch untersucht. Es handelt sich dabei um ein Produktgemisch bestehend aus $Si(C_2F_5)_4$ und $(C_2F_5)_3SiF$ im Verhältnis 10:1.

$^{29}Si$-NMR-spektroskopische Daten des Produktgemisches (Lösungsmittel: Pentan)

| δ / ppm | Multiplizität | J / Hz | Zuordnung |
|---|---|---|---|
| -35.8 | nonett | $^{2}J(SiF)$ = 39 | $Si(C_2F_5)_4$ |
| -60.7 | m | - | $(C_2F_5)_3SiF$ |

$^{19}$F-NMR-spektroskopische Daten des Produktgemisches(Lösungsmittel: Pentan)

| δ / ppm | Zuordnung | Integral |
|---|---|---|
| -82.9 | $Si(CF_2CF_3)_4$ | 12 |
| -84.2 | $(CF_3CF_2)_3SiF$ | 0.7 |
| -117.7 | $Si(CF_2CF_3)_4$ | 8 |
| -132.1 | $(CF_3CF_2)_3SiF$ | 0.5 |

Beispiel 3: Darstellung von Bromtris(pentafluorethyl)silan

$$Et_2NSi(C_2F_5)_3 + 2HBr \rightarrow (C_2F_5)_3SiBr + [H_2NEt_2]Br$$

Diethylaminotris(pentafluorethyl)silan (22,9g, 50 mmol) wird in einem Schlenkkolben vorgelegt und Bromwasserstoff (140 mmol) aufkondensiert. Es wird auf Raumtemperatur erwärmt. Die flüchtigen Bestandteile werden mittels Kondensation in eine Kühlfalle mit einer Temperatur von -196°C überführt. Durch fraktionierte Kondensation über eine auf -78 °C gekühlte Kühlfalle wird überschüssiges HBr entfernt. Das Tris(pentafluorethyl)brom-silan (0.688 g, 1.48 mmol, 89 %) wird als farblose Flüssigkeit erhalten. Ausbeute: 22,7 g (12,4 mmol) 98 % (bezogen auf $Et_2NSi(C_2F_5)_3$).

NMR-spektroskopische Daten von $Si(C_2F_5)_3Br$ in Pentan, RT

| Kern | δ / ppm | Aufspaltung | J / Hz | Zuordnung |
|---|---|---|---|---|
| $^{19}F$ | -80,8 | s | - | $[Si(CF_2CF_3)_3Br]$ |
| | -121,1 | s | $^1J_{CF}$=277 | $[Si(CF_2CF_3)_3Br]$ |
| $^{29}Si$ | -22,7 | sept | $^2J_{siF}$=43 | $[Si(CF_2CF_3)_3Br]$ |
| $^{13}C\{^{19}F\}$ | 118,9 | s | - | $[Si(CF_2CF_3)_3Br]$ |
| | 114,2 | s | $^1J_{SiC}$=79 | $[Si(CF_2CF_3)_3Br]$ |

Beispiel 4: Darstellung von Fluortris(pentafluorethyl)silan

$$(C_2F_5)_3SiBr \xrightarrow[\text{RT, 1 d}]{SbF_3} (C_2F_5)_3SiF$$

In einem 100ml-Kolben mit Young-Hahn werden 0,9 g (5 mmol) $SbF_3$ vorgelegt und 1,6 g (3,5 mmol) $(C_2F_5)_3SiBr$ aufkondensiert. Nach einem Tag Rühren kann $(C_2F_5)_3SiF$ als klare farblose Flüssigkeit abkondensiert werden. Ausbeute: 1,2 g (3,0 mmol) 86 % (bezogen auf $(C_2F_5)_3SiBr$).

NMR-spektroskopische Daten von $(C_2F_5)_3SiF$ als Reinsubstanz, RT.

| Kern | δ / ppm | Aufspaltung | J / Hz | Zuordnung |
|---|---|---|---|---|
| $^{19}F$ | -83,9 | m | - | $[Si(CF_2CF_3)_3F]$ |
| | -127,3 | m | - | $[Si(CF_2CF_3)_3F]$ |
| | -181,2 | m | $^1J_{Si}$= 345,0 | $[Si(CF_2CF_3)_3F]$ |
| $^{13}C^{19}F$ DEPT | 118,2 | s | - | $[Si(CF_2CF_3)_3H]$ |
| | 113,5 | d | - | $[Si(CF_2CF_3)_3F]$ |
| $^{29}Si$ IG | -33,0 | d sept | $^1J_{SiF}$= 345,0<br>$^2J_{SiF}$= 43,7 | $[Si(CF_2CF_3)_3F]$ |

Beispiel 5. Darstellung von Methyltris(pentafluorethyl)silan

$$CH_3SiCl_3 \; + \; 3\,LiC_2F_5 \xrightarrow{-80°C,\ Et_2O} CH_3Si(C_2F_5)_3 \; + \; 3\,LiCl$$

Es werden 150 ml Diethylether und 52 ml 2 M (104 mmol) n-Butyllithium in Pentan in einem Schlenkkolben vorgelegt und bei -85°C entgast. Nach dem Aufkondensieren von 120 mmol Pentafluorethan wird die Lösung für 45 min bei -80°C gerührt. Anschließend werden langsam 5 g (33 mmol) $CH_3SiCl_3$ zugetropft. Das Reaktionsgemisch wird langsam mit der Möglichkeit zum Druckausgleich im Kältebad von -80°C auf RT erwärmt. Der entstehende Niederschlag wird über eine Umkehrfritte abfiltriert. Die Lösemittel werden über eine Claisen-Brücke abdestilliert. Der leicht gelbliche Rückstand wird fraktioniert destilliert. Bei Normaldruck und einer Kopftemperatur von 56 °C wird $CH_3Si(C_2F_5)_3$ als klare farblose Flüssigkeit erhalten. Ausbeute: 7,6 g (19 mmol) 57 % (bezogen auf $CH_3SiCl_3$).

NMR-spektroskopische Daten von $Si(C_2F_5)_3CH_3$ in $CDCl_3$, RT

| Kern | δ / ppm | Aufspaltung | J / Hz | Zuordnung |
|---|---|---|---|---|
| $^{19}F$ | -81,5 | s | - | $[Si(CF_2CF_3)_3Me]$ |
| | -122,8 | s | - | $[Si(CF_2CF_3)_3Me]$ |
| 1H | 0,93 | s | | $[Si(CF_2CF_3)_3Me]$ |
| $^{29}Si$ | -9,9 | sept, q | $^2J_{SiF}$= 35 | $[Si(CF_2CF_3)_3Me]$ |
| | | | $^2J_{SiH}$= 7,7 | |
| $^{13}C\{^{19}F\}$ | 118,8 | s | $^2J_{SiC}$= 8 | $[Si(CF_2CF_3)_3Me]$ |
| | 115,6 | s | $^3J_{CH}$= 2 | $[Si(CF_2CF_3)_3Me]$ |
| $^{13}C\{^1H\}$ | 10,8 | s | - | $[Si(CF_2CF_3)_3Me]$ |

Beispiel 6: Darstellung von Fluor-tris(pentafluorethyl)silan

$$(C_2F_5)_3SiCH_3 \xrightarrow[-\ 3\ HF]{F_2/He} (C_2F_5)_3SiCF_3 \xrightarrow[-\ "CF_2"]{RT} (C_2F_5)_3SiF$$

$(C_2F_5)_3SiCH_3$ (340 mg, 0,85 mmol) werden in ein Reaktionsgefäß kondensiert, viermal mit je 1 mmol $F_2$ versetzt und jeweils eine Stunde bei Raumtemperatur gerührt. Anschließend werden alle flüchtigen Substanzen in eine Kühlfalle kondensiert. Bei - 75 °C wird der jeweilige Gasraum entnommen und verworfen. Der Rückstand (0,306 g) wird NMR-spektroskopisch untersucht. Nach 14 Stunden bei Raumtemperatur haben sich 90 % der ursprünglichen Menge $(C_2F_5)_3SiCF_3$ unter Abspaltung von $C_2F_4$ und $C_3F_6$ in $(C_2F_5)_3SiF$ umgewandelt.

$^{29}Si$-NMR-spektroskopische Daten vom Reaktionsgemisch (ohne Lösungsmittel)

| δ / ppm | Multiplizität | J / Hz | Zuordnung |
|---|---|---|---|
| -34.0 | m | $^1J(SiF)$ = 345 | $(C_2F_5)_3SiF$ |
| -40.1 | m | - | $(C_2F_5)_3SiCF_3$ |
| -60.5 | m | | $(C_2F_5)_2SiF_2$ |

$^{19}F$-NMR-spektroskopische Daten vom Reaktionsgemisch(ohne Lösungsmittel)

| δ / ppm | Multiplizität | J / Hz | Zuordnung | Integral |
|---|---|---|---|---|
| -56.2 | m | $^2J(SiF)$ = 48 | $(C_2F_5)_3SiCF_3$ | 3 |
| -84.6 | m | - | $(CF_3CF_2)_3SiCF_3$ | 9 |
| -84.8 | m | - | $(CF_3CF_2)_3SiF$ | 9 |

(fortgesetzt)

| δ / ppm | Multiplizität | J / Hz | Zuordnung | Integral |
|---|---|---|---|---|
| -85.8 | m | - | $(CF_3CF_2)_2SiF_2$ | 0.7 |
| -120.6 | m | $^2J(SiF) = 37$ | $(CF_3CF_2)_3SiCF_3$ | 6 |
| -128.3 | m | $^2J(SiF) = 40$ | $(CF_3CF_2)_3SiF$ | 8 |
| -133.5 | m | $^2J(SiF) = 43$ | $(CF_3CF_2)_2SiF_2$ | 0.6 |
| -151.6 | m | $^1J(SiF) = 325$ | $(C_2F_5)_2SiF_2$ | 0.2 |
| -182.2 | m | $^1J(SiF) = 342$ | $(C_2F_5)_3SiF$ | 1 |

Beispiel 7. Darstellung von Lithium Tris(pentafluorethyl)difluorosilikat(-1), $Li[(C_2F_5)_3SiF_2]$

$$(C_2F_5)_3SiF + LiF \xrightarrow[\text{DMC}]{\text{R.T.}} Li[(C_2F_5)_3SiF_2]$$

In einem Schlenkolben werden unter $N_2$-Atmosphäre 624,5 mg (24 mmol) LiF in 24 ml (25,77 g) Dimethylcarbonat (DMC), $(CH_3O)_2CO$ (über Molsieb getrocknet und frisch destilliert) vorgelegt und bei -196°C 9,723 g (24 mmol) $(C_2F_5)_3SiF$ aufkondensiert. Beim Erwärmen auf RT unter Rühren geht das LiF in Lösung. Die Ausbeute an $Li[(C_2F_5)_3SiF_2]$ ist quantitativ.

NMR-spektroskopische Daten von $Li[Si(C_2F_5)_3F_2]$ in $(CH_3O)_2CO$ mit Aceton-$D_6$ als externe Locksubstanz, RT

| Kern | δ / ppm | Aufspaltung | J / Hz | Zuordnung |
|---|---|---|---|---|
| $^{19}F$ | -84,4 | t | $^4J_{FF}$ = 8Hz | $[Si(CF_2CF_3)_3F_2]^-$ |
| | -128,0 | t | $3J_{FF}$ = 8Hz | $[Si(CF_2CF_3)_3F_2]^-$ |
| | -107,9 | m | | $[Si(CF_2CF_3)_3F_2]^-$ |

Die Leitfähigkeit für eine Lösung von 10,3 g (24 mmol) $Li[(C_2F_5)_3SiF_2]$ in 24 ml Dimethylcarbonat ist:

| Temperatur, °C | Leitfähigkeit, $mS/cm^2$ |
|---|---|
| -20 | 1,39 |
| -10 | 3,43 |
| 0 | 6,62 |
| 20 | 9,51 |
| 40 | 12,42 |
| 60 | 15,80 |
| 80 | 19,19. |

Beispiel 8. Darstellung von Dilithium Tris(pentafluorethyl)-trifluorosilikat(-2), $Li_2[Si(C_2F_5)_3F_3]$

$$6\ LiC_2F_5 + SiCl_4 \xrightarrow[\text{- 4 LiCl, - 3 } C_2F_4]{\text{-80 °C, } Et_2O} Li_2[Si(C_2F_5)_3F_3]$$

Ein Gemisch aus 50 ml Diethylether und 10 ml 1,6 M (16 mmol) n-Butyllithium in Hexan wird bei -92 °C entgast und 20 mmol Pentafluorethan aufkondensiert. Anschließend wird die farblose Lösung für 15 min bei -90 °C gerührt und 0,32 g (1,9 mmol) $SiCl_4$ aufkondensiert. Das Reaktionsgemisch wird langsam im Kältebad von -80 °C auf RT erwärmt und das Produkt NMR-spektroskopisch charakterisiert.

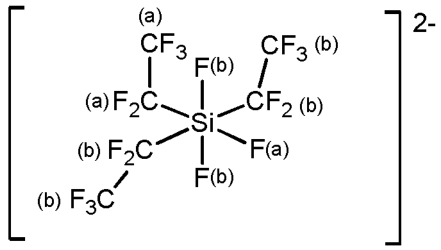

NMR-spektroskopische Daten von $Li_2[Si(C_2F_5)_3F_3]$ in $Et_2O$, RT.

| Kern | δ / ppm | J / Hz | Zuordnung |
|---|---|---|---|
| $^{29}Si\{^{19}F\}$ | -177,8 | | $[Si(CF_2CF_3)_3F_3]^{2-}$ |
| $^{19}F$ | -82,1 | | $CF_3$(b) |
| | -82,8 | | $CF_3$(a) |
| | -111,8 | $^1J_{SiF}$ = 205 | F(a) |
| | -124,4 | | $CF_2$(b) |
| | -124,8 | | $CF_2$(a) |
| | -144,2 | $^1J_{SiF}$ = 235 | F(b) |

**Patentansprüche**

**1.** Verbindungen der Formel (I) und/oder (II)

$Li[(R_f)_nSiF_{5-n}]$ (I)

$Li_2[(R_f)_nSiF_{6-n}]$ (II),

wobei

$R_f$ jeweils unabhängig voneinander eine geradkettige oder verzweigte Perfluoralkylgruppe mit 2 bis 12 C-Atomen bedeutet und
n eine ganze Zahl von 1 bis 4 bedeutet.

**2.** Verbindungen nach Anspruch 1, **dadurch gekennzeichnet, dass** die Variable n 1, 2 oder 3 bedeutet.

**3.** Verbindungen nach Anspruch 1 oder 2, **dadurch gekennzeichnet, dass** die Variable n 2 oder 3 bedeutet.

**4.** Verbindungen nach einem oder mehreren der Ansprüche 1 bis 3, **dadurch gekennzeichnet, dass** die Perfluoralkylgruppe $R_f$ jeweils gleich ist.

**5.** Verfahren zur Herstellung von Verbindungen der Formel (I) nach einem oder mehreren der Ansprüche 1 bis 4, **dadurch gekennzeichnet, dass** ein Fluor(perfluoralkyl)silan der Formel (III)

$(R_f)_nSiF_{4-n}$ (III),

wobei $R_f$ und n eine der in den Ansprüchen 1 bis 3 genannte Bedeutung haben, unter trockener Luft oder Inertgasbedingungen und in Gegenwart eines organischen Lösungsmittels mit Lithiumfluorid umgesetzt wird.

**6.** Verfahren zur Herstellung von Verbindungen der Formel (I) und/oder (II) nach einem oder mehreren der Ansprüche 1 bis 4, **dadurch gekennzeichnet, dass** Siliziumtetrachlorid mit Perfluoralkyllithium umgesetzt wird, wobei Perfluoralkyl einer Perfluoralkylgruppe mit 2 bis 12 C-Atomen entspricht.

**7.** Verwendung mindestens einer Verbindung nach einem oder mehreren der Ansprüche 1 bis 4 als Leitsalz in elektrochemischen Zellen.

8. Verwendung nach Anspruch 7 **dadurch gekennzeichnet, dass** die elektrochemische Zelle eine Lithium- oder Lithium-Ionen-Batterie oder ein Lithium-Ionen-Kondensator ist.

9. Elektrolyt enthaltend mindestens eine Verbindung nach einem oder mehreren der Ansprüche 1 bis 4.

10. Elektrochemische Zelle enthaltend mindestens eine Verbindung nach einem oder mehreren der Ansprüche 1 bis 4.

## Claims

1. Compounds of the formula (I) and/or (II)

$$Li[(R_f)_nSiF_{5-n}] \quad (I)$$

$$Li_2[(R_f)_nSiF_{6-n}] \quad (II)$$

where

$R_f$ independently at each occurrence is a straight-chain or branched perfluoroalkyl group having 2 to 12 C atoms and
n is an integer from 1 to 4.

2. The compounds according to claim 1, wherein the variable n is 1, 2, or 3.

3. The compounds according to claim 1 or 2, wherein the variable n is 2 or 3.

4. The compounds according to one or more of claims 1 to 3, wherein the perfluoroalkyl group $R_f$ is identical at each occurrence.

5. A process for preparing compounds of the formula (I) according to one or more of claims 1 to 4, wherein a fluoro(perfluoroalkyl)silane of the formula (III)

$$(R_f)_nSiF_{4-n} \quad (III)$$

where $R_f$ and n have the definition stated in claims 1 to 3 is reacted with lithium fluoride under dry air or inert gas conditions and in the presence of an organic solvent.

6. A process for preparing compounds of the formula (I) and/or (II) according to one or more of claims 1 to 4, wherein silicon tetrachloride is reacted with perfluoroalkyllithium, where perfluoroalkyl corresponds to a perfluoroalkyl group having 2 to 12 C atoms.

7. The use of at least one compound according to one or more of claims 1 to 4 as conductive salt in electrochemical cells.

8. The use according to claim 7, wherein the electrochemical cell is a lithium battery or a lithium ion battery or a lithium ion capacitor.

9. An electrolyte comprising at least one compound according to one or more of claims 1 to 4.

10. An electrochemical cell comprising at least one compound according to one or more of claims 1 to 4.

## Revendications

1. Composés de formule (I) et/ou (II)

$$Li[(R_f)_nSiF_{5-n}] \quad (I)$$

$$Li_2[(R_f)_nSiF_{6-n}] \quad (II)$$

dans lesquelles

les $R_f$ signifient à chaque fois indépendamment les uns des autres un groupe perfluoroalkyle linéaire ou ramifié de 2 à 12 atomes C, et
n signifie un nombre entier de 1 à 4.

2. Composés selon la revendication 1, **caractérisés en ce que** la variable n signifie 1, 2 ou 3.

3. Composés selon la revendication 1 ou 2, **caractérisés en ce que** la variable n signifie 2 ou 3.

4. Composés selon une ou plusieurs des revendications 1 à 3, **caractérisés en ce que** le groupe perfluoroalkyle $R_f$ est à chaque fois le même.

5. Procédé de fabrication de composés de formule (I) selon une ou plusieurs des revendications 1 à 4, **caractérisé en ce qu'**un fluoro(perfluoroalkyl)silane de formule (III)

$$(R_f)_nSiF_{4-n} \qquad \text{(III)}$$

dans laquelle $R_f$ et n ont une des significations indiquées dans les revendications 1 à 3, est mis en réaction sous de l'air sec ou dans des conditions de gaz inerte et en présence d'un solvant organique avec du fluorure de lithium.

6. Procédé de fabrication de composés de formule (I) et/ou (II) selon une ou plusieurs des revendications 1 à 4, **caractérisé en ce que** du tétrachlorure de silicium est mis en réaction avec du perfluoroalkyl-lithium, le perfluoroalkyle correspondant à un groupe perfluoroalkyle de 2 à 12 atomes C.

7. Utilisation d'au moins un composé selon une ou plusieurs des revendications 1 à 4 en tant que sel conducteur dans des cellules électrochimiques.

8. Utilisation selon la revendication 7, **caractérisée en ce que** la cellule électrochimique est une batterie au lithium ou au lithium-ion ou un condensateur au lithium-ion.

9. Électrolyte contenant au moins un composé selon une ou plusieurs des revendications 1 à 4.

10. Cellule électrochimique contenant au moins un composé selon une ou plusieurs des revendications 1 à 4.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 63239780 B
- EP 1172877 A1


### In der Beschreibung aufgeführte Nicht-Patentliteratur


- Advances in Lithium-Ion Batteries. Kluwer Academic/Plenum Publisher, 2002, 155-183
- **N. MAGGIAROSA et al.** *Angew. Chem. Int. Ed.,* 1999, vol. 38 (15), 2252-2253
- **A. KOLOMEISEV et al.** *Chem. Commun.,* 1999, 1017-1018
- **P. G. GASSMANN ; N. J. O'REILLY.** *Tetrahedron Lett.,* 1985, vol. 26, 5243
- **H. UNO ; S.-I. OKADA ; T. ONO ; Y. SHIRAISHI ; H. SUZUKI.** *J. Org. Chem.,* 1992, vol. 57, 1504
- **H. UNO ; H. SUZUKI.** *Synlett,* 1993, 91
- **K. MARUOKA ; I. SHIMADA ; M. AKAKURA ; H. YAMAMOTO.** *Synlett,* 1994, 847